**Europäisches Patentamt**

**European Patent Office**

**Office européen des brevets**

(19)

(11) Veröffentlichungsnummer: **0 314 867 B1**

# EUROPÄISCHE PATENTSCHRIFT

(12)

(45) Veröffentlichungstag der Patentschrift: **26.02.92**

(51) Int. Cl.⁵: **B60R 21/16**, D03D 1/02

(21) Anmeldenummer: **88108641.7**

(22) Anmeldetag: **31.05.88**

(54) **Airbag fuer Kraftfahrzeuge.**

(30) Priorität: **03.11.87 DE 8714595 U**

(43) Veröffentlichungstag der Anmeldung:
**10.05.89 Patentblatt 89/19**

(45) Bekanntmachung des Hinweises auf die
Patenterteilung:
**26.02.92 Patentblatt 92/09**

(84) Benannte Vertragsstaaten:
**BE DE ES FR GB IT NL SE**

(56) Entgegenhaltungen:
**EP-A- 0 110 047**
**DE-A- 1 781 383**
**FR-A- 1 243 791**

(73) Patentinhaber: **Bloch, Klaus**
**Schwalbenweg 17**
**W-5205 St. Augustin 1(DE)**

(72) Erfinder: **Bloch, Klaus**
**Schwalbenweg 17**
**W-5205 St. Augustin 1(DE)**

(74) Vertreter: **Stark, Walter, Dr.-Ing.**
**Moerser Strasse 140**
**W-4150 Krefeld(DE)**

## Beschreibung

Die Erfindung betrifft einen Airbag für Kraftfahrzeuge aus einem Gewebe aus Kunststofffäden. Es kann sich dabei um einen sogenannnten Lenkrad-Airbag oder auch um einen Beifahrer-Airbag handeln. In der Praxis bestehen Airbags für Kraftfahrzeuge aus einem gummierten Polyamidgewebe. Die Gummierung ist erforderlich, weil das Polyamidgewebe luftdurchlässig ist und erst die Gummierung sicherstellt, daß der aufgeblasene Airbag seine Funktion erfüllen kann. Damit die bekannten, aus gummierten Polyamidgewebe bestehenden Airbags, die extrem dicht zusammengefaltet sind, auch nach vielen Jahren ihre Funktionsfähigkeit behalten und sich im Ernstfall einwandfrei entfalten, wird die gummierte Innenseite des Airbags mit Talkum gepudert, welches verhindert, daß die aufeinanderliegenden, alternden Gummierungen im Laufe der Zeit miteinander verkleben. Das Talkumpuder sowie auch Kleinstpartikel aus der Gummierung und aus dem Gasgemisch, welches im Ernstfall in den Airbag eingeblasen wird, werden jedoch, wie Versuche bestätigt haben, bei dem explosionsartigen Entfalten des Airbags durch die sich teilweise lösende Gummierung und durch das Gewebe hindurch getrieben und können in die Augen und Atemwege des Fahrers oder des Beifahrers eindringen.

Aufgabe der Erfindung ist es, einen Airbag in der eingangs beschriebenen Gattung anzugeben, der alterungsbeständig ist und seine Funktionsfähigkeit auch nach vielen Jahren beibehält und bei dessen Entfaltung im Ernstfall keine gesundheitlichen Risiken für Fahrer oder Beifahrer enstehen.

Diese Aufgabe wird gelöst mit einem Airbag der eingangs beschriebenen Gattung, der gekennzeichnet ist durch ein Gewebe mit übersättigter Gewebeeinstellung, welches geschrumpft, thermofixiert sowie bei einer Temperatur zwischen 60 und 225 ° C, einem Druck zwischen 10 und 100 t und einer Laufgeschwindigkeit zwischen 5 und 25 m/min kalandriert ist.

Von einer übersättigten Gewebeeinstellung spricht man, wenn das Gewebe eine extrem dichte Kettfadeneinstellung und eine webtechnisch gerade noch mögliche Schußfadeneinstellung aufweist. Durch das Schrumpfen, Thermofixieren und Kalandrieren wird das Gewebe zusätzlich noch so verdichtet, daß es praktisch luftundurchlässig ist. Versuche haben gezeigt, daß das Gewebe nur noch einen Luftdurchsatz zwischen 0 und 5 ltr/dm$^2$/min bei 20 mm WS nach DIN 53887 hat. Das Gewebe ist aber auch wesentlich leichter als herkömmliche gummierte Gewebe für Airbags, es können Gewichtseinsparungen bis zu 35 % erreicht werden. Ferner besitzt dieses Gewebe wegen der übersättigten Gewebeeinstellung auch bis zu 80 % höhere Reißfestigkeiten und Weiterreißfestigkeiten gegenüber herkömmlichen, gummibeschichteten Polyamid-Geweben. Der damit ausschließlich aus Kunststofffäden aufgebaute Airbag ist alterungs- und verrottungsbeständig, er kann auch beliebig dicht gepackt werden, ohne daß die Gefahr einer Verklebung aufeinander liegender Lagen besteht.

Grundsätzlich kann das Gewebe in bekannten Webbindungen ausgeführt sein, wie Köper-, Atlas-, Rips-, Panama-, doppelfädige Leinwand-, Cotton-Duck-Bindungen ausgeführt sein. Eine bevorzugte Ausführung der Erfindung ist dadurch gekennzeichnet, daß das Gewebe eine Leinwandbindung mit 34 Kettfäden/cm aus dtex 470 und 16 Schußfäden/cm aus dtex 470 aufweist.

Besonders günstige Ergebnisse erreicht man, wenn das Gewebe bei einer Temperatur zwischen 130 und 160 ° C, einen Druck zwischen 30 bis 50 t und einer Laufgeschwindigkeit zwischen 5 und 7 m/min kalandriert ist.

Im Ergebnis liegt ein Gewebe vor mit einem Flächengewicht von 280 ± 10 g/m$^2$ und einer Dicke von 0,39 ± 0,02 mm.

Das Gewebe kann aus schrumpfbaren und thermofixierbaren Kunststofffäden aufgebaut sein, z. B. aus Polyester, Aramiden, PPS (Polyphenylene-Sulfide), Polyimiden und dergleichen. Nach bevorzugter Ausführung der Erfindung soll das Gewebe jedoch aus Polyamidfäden bestehen.

Üblicherweise werden Airbags für Kraftfahrzeuge zusätzlich mit Fangbändern und einem Flammenschutz im Bereich des Mundstückes ausgerüstet. Dabei handelt es sich herkömmlich um doppelseitig gummierte breite Schräggewebebänder, bei deren Einsatz ebenfalls die oben erläuterten Nachteile auftreten. Diese Nachteile lassen sich vermeiden, wenn erfindungsgemäß die Fangbänder und/oder der Flammschutz aus PTFE-, Polyamid-, Aramid-, Copolyimid- oder PPS-Garnen oder -Fasern bestehen. Diese Materialien der Fangbänder oder des Flammschutzes verhalten sich auch bei Berührung mit Metallen im Lenkradbereich, sowie mit PUR-Integralschaumstoff oder mit Tiefziehfolien neutral, so daß keinerlei Veränderungen zu erwarten sind, die die Funktion des Airbags beeinträchtigen könnten. Hinzu kommt, daß diese Materialien auch eine sehr große Temperaturbeständigkeit und eine sehr große Festigkeit besitzen, so daß die Querschnitte der Fangbänder und/oder des Flammschutzes entsprechend reduziert werden können. Auch dadurch lassen sich Gewichtseinsparungen erzielen.

Ein Ausführungsbeispiel der Erfindung ist in der Zeichnung dargestellt; es zeigen:

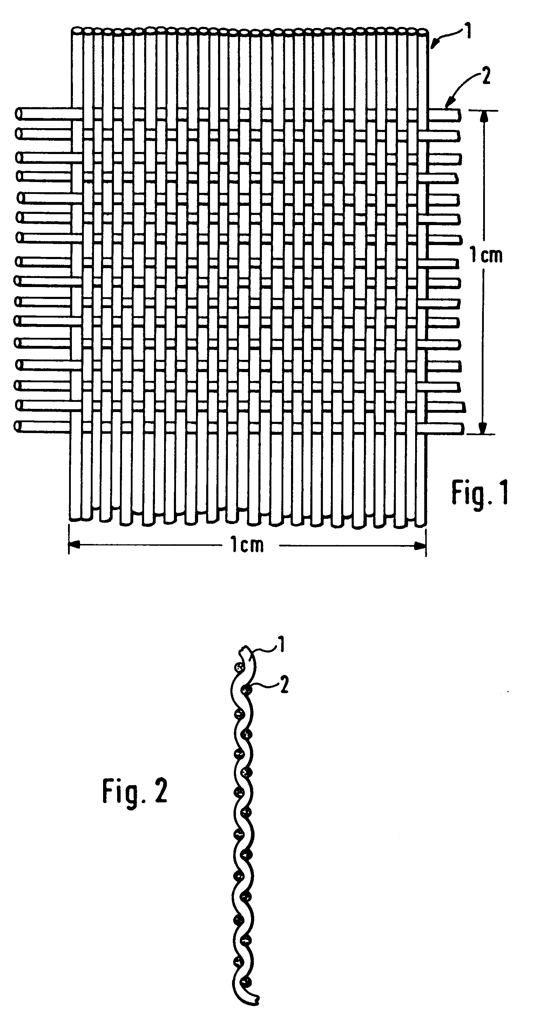

Fig. 1 eine Draufsicht auf einen Gewebeabschnitt,

Fig. 2 einen Schnitt durch den Gegenstand nach Figur 1.

2

Fig. 3 eine Draufsicht auf eine Fangbandkonstruktion

Das dargestellte Gewebe ist bestimmt für Airbags von Kraftfahrzeugen. Es besteht aus Kunststoffäden, die mit übersättigter Gewebeeinstellung in Leinwandbindung gewebt sind. Das dargestellte Gewebe weist 34 Kettfäden 1 pro cm aus dtex 470 und 16 Schußfäden pro cm aus dtex 470 auf. Das Gewebe besteht aus Polyamidfäden und ist geschrumpft, thermofixiert sowie anschließend bei einer Temperatur zwischen 130 und 160° C, einem Druck zwischen 30 und 50 t und einer Laufgeschwindigkeit zwischen 6 und 7 m/min kalandriert. Beim Kalandrieren oder sonstigen Ausrüsten des Gewebes können auch Pulver oder Folien, z.B. in Form von Schmelzklebern sowie wäßrige Dispersionen aus Fluorthermoplasten, zur Verdichtung und zusätzlichen höheren Hitzebeständigkeit des Airbaggewebes oder der Fangbänder eingesetzt werden. Das Gewebe besitzt ein Flächengewicht von $280 \pm 10$ g/m$^2$ und eine Dicke von $0,39 \pm 0,02$ mm.

Die gummierten Polyamid-Stretchgewebe-Fangbänder (Stretchwirkung nur in einer Richtung) dehnen sich bei der Gasbefüllung des Air-Bags (innerhalb von Millisekunden bis zu 5 bar Innendruck) aufgrund des gummierten Polyamid-Stretchgewebes aus und wirken so energieverzehrend. Bei nachlassendem Innendruck des Air-Bags (Austritt des Luft/Gasgemisches durch die vorgegebenen Austrittsöffnungen), ziehen diese Fangbänder aufgrund der reversiblen Dehnung des gummierten Polyamid-Stretchgewebes den Air-Bag wieder in die ursprünglich vorgegebene Form und Größe zurück.

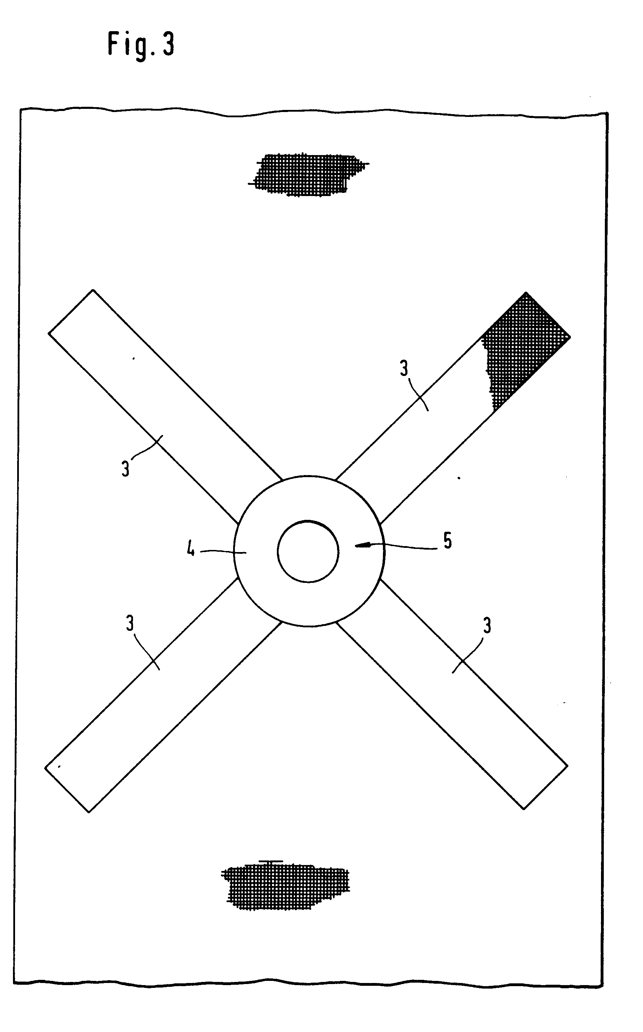

Fig. 3 zeigt für die Konfektion eine Konstruktion der Fangbänder 3 zusammen mit dem Flammschutz 4, der um das Mundstück 5 des Air-Bags vorgenommen wird, aus einer Einheit bestehend, wobei die Fangband/Flammschutzkonstruktion im Winkel von 45 Grad zum Verlauf der Polyamid-Stretch-Garne aus dem gummierten Polyamid geschnitten wird. Fangband- und Flammschutzkonstruktion aus dem gummierten Polyamid-Stretchgewebe können aber auch aus zwei oder mehr Einheiten bestehen.

## Patentansprüche

1. Airbag für Kraftfahrzeuge aus einem Gewebe aus Kunststoffäden, gekennzeichnet durch ein Gewebe mit übersättigter Gewebeeinstellung, welches geschrumpft, thermofixiert sowie bei einer Temperatur zwischen 60 und 250° C, einem Druck zwischen 10 und 100 t und einer Laufgeschwindigkeit zwischen 5 und 25 m/min kalandriert ist.

2. Airbag nach Anspruch 1, dadurch gekennzeichnet, daß das Gewebe eine Leinwandbindung mit 34 Kettfäden/cm aus dtex 470 und 16 Schußfäden/cm aus dtex 470 aufweist.

3. Airbag nach Anspruch 1 oder 2, dadurch gekennzeichnet, daß das Gewebe bei einer Temperatur zwischen 130 und 160° C, einem Druck zwischen 30 und 50 t und einer Laufgeschwindigkeit zwischen 5 und 7 m/min kalandriert ist.

4. Airbag nach einem der Ansprüche 1 bis 3, dadurch gekennzeichnet, daß das Gewebe ein Flächengewicht von $280 \pm 10$ g/m$^2$ und eine Dicke von $0,39 \pm 0.02$ mm aufweist.

5. Airbag nach einem der Ansprüche 1 bis 4, dadurch gekennzeichnet, daß das Gewebe aus Polyamidfäden besteht.

6. Airbag nach einem der Ansprüche 1 bis 5 mit Fangbändern und Flammschutz im Bereich des Mundstückes, dadurch gekennzeichnet, daß die Fangbänder und/oder der Flammschutz aus PTFE-, Polyamid-, Aramid-, Copolyimid- oder PPS- Garnen oder -Fasern bestehen.

7. Airbag nach einem der Ansprüche 1 bis 6, dadurch gekennzeichnet, daß die Fangbänder aus einem gummierten Stretchgewebe bestehen.

## Claims

1. Air bag for motor vehicles, comprised of a fabric formed from plastics material filaments, characterised by a fabric with supersaturated fabric setting, which fabric is shrunk, thermofixed and calendered at a temperature of between 60 and 250° C, at a pressure of between 10 and 100 t, and at an operating speed of between 5 and 25 m/min.

2. Air bag according to claim 1, characterised in that the fabric has a basket weave with 34 warp threads/cm of dtex 470 and 16 weft threads/cm of dtex 470.

3. Air bag according to claim 1 or 2, characterised in that the fabric is calendered at a temperature of between 130 and 160° C, at a pressure of between 30 and 50 t, and at an operating speed of between 5 and 7 m/min.

4. Air bag according to one of claims 1 to 3, characterised in that the fabric has a weight per unit area of 280 + 10 g/m$^2$ and a thickness of 0.39 + 0.02 mm.

5. Air bag according to one of claims 1 to 4, characterised in that the fabric is formed from polyamide filaments.

6. Air bag according to one of claims 1 to 5, comprising catch bands and fireproof means in the region of the nozzle, characterised in that the catch bands and/or the fireproof means are formed from PTFE, polyamide, aramide, copolyimide or PPS yarns or fibres.

7. Air bag according to one of claims 1 to 6, characterised in that the catch bands are formed from a rubber-coated stretch fabric.

**Revendications**

1. Sac d'air pour véhicules automobiles constitué d'un tissu de fils synthétiques, caractérisé par un tissu à contexture sursaturée, qui est rétracté, thermofixé, ainsi que calandré à une température comprise entre 60 et 250˚C, une pression comprise entre 10 et 100 t et une vitesse d'avance comprise entre 5 et 25 m/min.

2. Sac d'air selon la revendication 1, caractérisé en ce que le tissu présente une armure-toile avec 34 fils de chaîne/cm en dtex 470 et 16 fils de trame/cm en dtex 470.

3. Sac d'air selon la revendication 1 ou 2, caractérisé en ce que le tissu est calandré à une température comprise entre 130 et 160˚C, une pression comprise entre 30 et 50 t et une vitesse d'avance comprise entre 5 et 7 m/min.

4. Sac d'air selon l'une des revendications 1 à 3, caractérisé en ce que le tissu présente un grammage de 280 ± 10 g/m$^2$ et une épaisseur de 0,39 ± 0,02 mm.

5. Sac d'air selon l'une des revendications 1 à 4, caractérisé en ce que le tissu est constitué de fils de polyamide.

6. Sac d'air selon l'une des revendications 1 à 5, avec des bandes de garde et un pare-flammes dans la région de l'embout, caractérisé en ce que les bandes de garde et/ou le pare-flammes sont constitués de fils ou fibres de PTFE, polyamide, aramide, copolyimide ou PPS.

7. Sac d'air selon l'une des revendications 1 à 6, caractérisé en ce que les bandes de garde sont constituées d'un tissu extensible caoutchouté.

Fig. 1

Fig. 2

# Fig. 3